# EUROPÄISCHE PATENTANMELDUNG

(11) **EP 0 631 715 A1**
(43) Veröffentlichungstag der Anmeldung: **04.01.1995**
(21) Anmeldenummer: 94109550.7
(22) Anmeldetag: 21.06.1994
(51) Int. Cl.: A01D 85/00

(54) **Vorrichtung und Verfahren zum Stapeln von Ballen**

(30) Priorität: 30.06.1993 DE 4321668
(71) Anmelder: Conzelmann, Theodor, D-72461 Albstadt (DE)
(72) Erfinder: Conzelmann, Theodor, D-72461 Albstadt (DE)
(74) Vertreter: Klocke, Peter, Dipl.-Ing.

(57) **Zusammenfassung**

Vorrichtung zum Stapeln von quaderförmigen Ballen mit einer Anhängeeinrichtung (2) an einer Ballenpresse (3), eine Aufnahmefläche (10) für die, die Ballenpresse verlassenden Ballen (5), einer Stapeleinrichtung zum Stapeln von zwei Ballen übereinander und einer Auswurfeinrichtung, wobei die Stapeleinrichtung einen Tragrahmen (6) und einer über der Aufnahmefläche angeordnete Greifeinrichtung zum Greifen und Anheben eines ersten Ballens aufweist, wobei die Greifeinrichtung derart an den Tragrahmen angelenkt ist, daß sie den ersten Ballen bei seiner Vorwärtsbewegung aufgrund eines nachschiebenden zweiten Ballens bis auf die Höhe des zweiten Ballens anhebt. Das Verfahren umfaßt die Schritte Greifen eines ersten, die Ballenpresse verlassenden Ballens mittels einer an einem Tragrahmen angebrachten Greifvorrichtung, Anheben des ersten Ballens durch Vorschub des nachfolgenden zweiten Ballens bis zu einer Höhe, die der Höhe des zweiten Ballens entspricht, wobei der erste Ballen von dem Punkt des Greifens bis zu dem Punkt, an dem das Anheben beendet ist, sich auf einer Kreisbahn bewegt, die durch die Befestigung der Greifeinrichtung an dem Tragrahmen bestimmt ist, Vorschieben des zweiten Ballens unter den ersten Ballen, Loslassen des ersten Ballens, wenn der zweite Ballen sich im wesentlichen unter dem ersten Ballen befindet. Die Erfindung ermöglicht eine preiswerte Einrichtung zum Stapeln insbesondere von Großballen mit Abmessung von 1,20 m Breite und 0,70 m Höhe, ohne daß aufwendige Steuerungsmittel verwendet werden müssen.

## Beschreibung

Die Erfindung betrifft eine fahrbare Vorrichtung zum Stapeln von quaderförmigen Ballen gemäß dem Oberbegriff des Vorrichtungsanspruchs. Darüberhinaus betrifft die Erfindung noch ein Verfahren zum Stapeln von quaderförmigen Ballen gemäß dem Oberbegriff des Verfahrensanspruchs.

Eine Vorrichtung gemäß dem Oberbegriff ist aus der DE-OS 38 04 347 bekannt. Bei dieser Vorrichtung wird der erste Ballen von einer Greifeinrichtung, die an einem Rahmenträger angelenkt ist, seitlich untergriffen, angehoben und auf den nachfolgenden zweiten Ballen abgesetzt. Das Anheben erfolgt mittels eines Parallelkurbelgetriebes, das beim Untergreifen in einem spitzen Winkel flach am Rahmen der Vorrichtung anliegt. Für den Anhebevorgang sind hydraulische Arbeitszylinder vorgesehen. Zur Führung der Ballen sind seitliche Begrenzungen vorhanden.

Aus der DE-AS1 300 721 ist eine Ballenpresse bekannt, die seriell hergestellte Ballen in die Höhe fördert.

Bekannte Ballenpressen erzeugen hochverdichtete Rechteckballen aus Stroh, Heu und Silage. Die sogenannten Großballenpressen erzeugen Ballen mit einem Format von 1,20 m Breite, 0,70 m Höhe und 1 m bis 2,5 m Länge. Diese Ballen liegen in gewissen Abständen verstreut auf dem Feld, so daß beim Aufladen für den Abtransport das Ladefahrzeug, z. B. ein Stapler, sehr viel Fahrwege zurticklegen muß. Aus diesem Grunde wurden Ballenstapler konstruiert, die immer zwei aufeinanderfolgende, die Ballenpressen verlassende Ballen stapelt und diese dann gemeinsam abwirft. Dies verkürzt die Zeitdauer, die für das Aufladen benötigt wird, sowie den Treibstoffverbrauch.

Aus der Firmenschrift FIATAGRI Stampato n. 60324253, A.G.U. Soncini-Guastalla (RE)-(02-91) ist eine Ballenpresse bekannt, die Ballen von 0,80 m Breite, 0,47 m Höhe und 2,0 m Länge verarbeiten kann und waagerecht aus der voranlaufenden Ballenpresse austretende Ballen aufnimmt und jeweils zwei aufeinanderstapelt. Dabei wird der erste Ballen durch den nachfolgenden Ballen auf eine Aufnahmefläche in der Stapelvorrichtung geschoben. Sobald der erste Ballen vollständig auf der Aufnahmefläche angekommen ist, fällt dieser auf eine darunterliegende zweite Aufnahmefläche, so daß der zweite Ballen durch den darauffolgenden nächsten Ballen auf den ersten, tieferliegenden Ballen geschoben wird. Sobald der Stapel aus den zwei Ballen komplett ist, wird der Stapel freigegeben und verläßt die Stapelvorrichtung. Bei dieser beschriebenen Vorrichtung ist es im allgemeinen erforderlich, daß die Ballen die Ballenpressen waagrecht verlassen. Darüberhinaus ist diese bekannte Vorrichtung in der Regel nur für eine bestimmte Ballenhöhe und nicht für Großballen mit der oben angegeben Abmessung geeignet.

Der vorliegenden Erfindung liegt daher die Aufgabe zugrunde, eine Möglichkeit anzugeben, wie auch größere Ballen, die die Ballenpresse schräg verlassen, gestapelt werden können, die gegenüber dem Stand der Technik verbessert und im Steuerungsaufwand reduziert ist.

Diese Aufgabe wird für eine fahrbare Vorrichtung mit den Merkmalen des Anspruchs 1 gelöst.

Bei dieser greift die Greifeinrichtung den ersten Ballen, so daß der Ballen und die Greifeinrichtung unverückbar miteinander verbunden sind, und die Hebeeinrichtung ist derart angelenkt, daß der erste Ballen durch den den ersten Ballen schiebenden zweiten Ballen angehoben wird. Wesentlich ist, daß der Ballen von der Greifeinrichtung so gehalten wird, daß die durch den zweiten nachfolgenden Ballen aufgebrachte Kraft auf die Hebeeinrichtung übertragen wird. Die Hebeeinrichtung selbst ist so angelenkt, daß durch die von dem zweiten nachschiebenden Ballen aufgebrachte Kraft eine Kraftkomponente nach oben entsteht. Dies kann beispielsweise durch eine Hebeeinrichtung mit einem Hebelgestänge erfolgen, das oberhalb oder unterhalb der Ballen an der Vorrichtung angelenkt ist. Die Anlenkung der Hebeeinrichtung muß unter einem sich aus dem Aufbau der Vorrichtung für den Fachmann ergebenden Kraftübertragungswinkel zur Erzeugung einer ausreichenden Krafkomponente nach oben erfolgen. Der angehobene Ballen wird in Bezug auf die Anlenkungspunkte des Gestänges auf einer Kreisbahn bewegt. Eine weitere Möglichkeit besteht darin, seitliche Gleitschienen vorzusehen, an denen sich die Greifeinrichtung aufgrund der Krafteinwirkung des nachschiebenden Ballens schräg nach oben bewegt, so lange, bis der nachschiebende Ballen unter den ersten Ballen gelangen kann. Die Gleitschienen können dabei so ausgestaltet sein, daß der Ballen sich linear oder auch bogenförmig nach oben bewegt. Die spezielle Ausgestaltung einer derart wirkenden Hebeeinrichtung ergibt sich für den Fachmann zwangsläufig aufgrund der verschiedenen Bedingungen, die bei der Realisation zu beachten sind. Je nach Aufbau, Reibungswiderstand und dergleichen müssen verschiedene geometrische Bedingungen eingehalten werden, um eine ausreichende, nach oben wirkende Kraftkomponente zu bewirken.

Weitere vorteilhafte Ausgestaltungen der Vorrichtung sind den Unteransprüchen zu entnehmen.

Danach weist eine bevorzugte Ausgestaltung eine Stapeleinrichtung mit einem Tragrahmen und eine über der Aufnahmefläche angeordnete Greifeinrichtung zum Greifen und Anheben eines ersten Ballens auf. Die Greifeinrichtung ist dabei derart an dem Tragrahmen angelenkt, daß sie den ersten Ballen bei seiner Vorwärtsbewegung aufgrund eines nachschiebenden zweiten Ballens bis auf die Höhe des zweiten Ballens anhebt. Die Aufnahmefläche wird im wesentlichen durch den tragenden Boden der Vorrichtung gebildet, wobei die Fläche selbst aus einzelnen in Längsrichtung verlaufenden Holmen oder dergleichen bestehen kann. Auf beiden Seiten der Aufnahmefläche kann sich dann ein Tragrahmen abstützen, so daß der Durchgang der Ballen in Längsrichtung möglich ist. An dem Tragrahmen kann eine Greifeinrichtung angebracht sein, die den Ballen an seinen Seitenflächen oder auch von oben greift. Die Greifeinrichtung kann mittels Schwenkarmen, Ketten oder dergleichen am Tragrahmen im oberen Bereich befestigt sein, so daß eine Bewegung in Längsrichtung der Vorrichtung möglich ist. Durch die Befestigung an einem Punkt wird bei der Vorwärtsbewegung des von der Greifeinrichtung festgehaltenen Ballens durch den nachschiebenden zweiten Ballen der erste Ballen angehoben, solange, bis der zweite Ballen unter den ersten Ballen gelangen kann. Das Schieben des zweiten Ballens unter den ersten erfolgt unter Reibung zwischen dem ersten und dem zweiten Ballen.

In einer Ausgestaltung ist die Greifeinrichtung über Schwenkarme an dem Tragrahmen angelenkt, wobei die Schwenkarme am oberen Ende am Tragrahmen und am unteren Ende der Greifeinrichtung um eine Horizontale schwenkbar gelagert sind. Es können auf jeder Seite des anzuhebenden Ballens ein oder mehrere Schwenkarme angeordnet sein. Dabei wird bei der Verwendung von nur einem Schwenkarm auf jeder Seite des Ballens dieser im wesentlichen in der Mitte der Längsseite des Tragrahmens angebracht sein, während bei der Verwendung von zwei Schwenkarmen diese an den oberen Eckpunkt anzubringen sind. Die horizontale Lagerung kann in einer für den Fachmann bekannten Art und Weise durch beispielsweise horizontale Wellen und dergleichen erfolgen.

In einer besonderen Ausgestaltung weist die Greifeinrichtung zwei gegenüber angeordnete Greifbacken zum seitlichen Greifen des ersten Ballens an seinen Längsseiten auf. Das seitliche Greifen und Freigeben ist einfacher zu realisieren als ein Greifen von oben. Das Greifen des Ballens an seiner Längsseite ist günstiger als an den Stirnseiten, da die Stirnseiten der Ballen wegen dem Kontakt zu dem nachfolgenden Ballen und dem vorangegangenen Stapel schlecht zugänglich sind. Die Greifeinrichtung umfaßt einen Rahmenträger, an dessen in Längsrichtung verlaufenden Holmen jeweils mindestens ein um eine parallel zum Längsholmen verlaufende Drehachse drehbar gelagerter Greifarm angeordnet ist, an dessen oberen Ende eine Betätigungseinrichtung angreift und an dessen unteren Ende ein Greifbacken befestigt ist. Der Rahmenträger wird dabei aus einem rechteckförmigen Rahmen gebildet, wobei die Lagerung in einer für den Fachmann ersichtlichen geeigneten Weise erfolgen kann. Die Greifbacken können durch einen oder mehreren Greifarme, die dann durch Querverstrebungen miteinander verbunden sind, gehalten werden. Die Betätigungseinrichtung am oberen Ende der jeweiligen Greifarme kann elektrisch, hydraulisch oder pneumatisch die Bewegung des Greifarms bewerkstelligen. Sie kann für jeden Greifarm getrennt ausgebildet und ansteuerbar sein. Zweckmäßigerweise ist der Greifarm nach innen in Richtung Ballen abgewinkelt, damit er bei seiner Bewegung nicht mit dem Schwenkarm bzw. dem Halterahmen in Berührung kommen kann.

In einer weiteren Ausgestaltung weist die Aufnahmefläche eine Wanne zur Führung der Ballen in Längsrichtung der Vorrichtung auf. Die Wanne wird durch die Aufnahmefläche und seitliche Flanken gebildet, so daß die Ballen in Längsrichtung gut geführt werden. Oberhalb der Wanne befindet sich eine Führung, die dazu dient, die Ballenpresse verlassende Ballen auf die Aufnahmefläche zu bringen und zu verhindern, daß eventuell verkantete Ballen gegen den Rahmenträger der Greifeinrichtung stoßen und damit den Vorschub blockieren.

In einer weiteren vorteilhaften Ausgestaltung weist der Tragrahmen zusammen mit einem Bodenträger in Längsrichtung betrachtet ein U-förmiges Querschnittsprofil auf, an dessen oberen Schenkelenden Schwenkarme um eine horizontale Achse drehbar angelenkt sind, deren unteren Enden, ebenfalls um die horizontale Achse schwenkbar gelagert, die Enden eines nach unten offenen im Querschnitt U-förmiges Profil aufweisenden Tragrahmen der Greifeinrichtung trägt, wobei die Greifarme an in den Ecken des Tragrahmens angeordneten um horizontal in Längsrichtung verlaufende Achsen schwenkbar sind. Damit weist der Tragrahmen zusätzlich zu den horizontalen Holmen beispielsweise an den Ecken senkrechte Tragholme auf, deren untere Enden um eine horizontale Achse schwenkbar an den unteren Enden der Schwenkarme gelagert sind. Diese Ausbildung ergibt einen sicheren und stabilen Aufbau, der auch bei schrägem Gelände die volle Funktionstüchtigkeit gewährleistet.

Zwischen den Schwenkarmen und den Tragrahmen sind vorteilhafterweise Haltemittel vorgesehen, die eine gesteuerte Freigabe und gedämpfte Rückführung der Greifeinrichtung in die Ausgangsstellung erlauben, wenn der Stapel von der Aufnahmefläche gerutscht ist. Bei dem Haltemittel handelt es sich um für den Fachmann geläufige Maßnahmen, die sicherstellen, daß bei dem Vorschub des Ballens und damit der Bewegung der Schwenkarme mit Anhebung des Ballens beispielsweise mittels einer Rasteinrichtung verhindert wird, daß die Schwenkarme unkontrolliert zurückschwenken können. Nach der Freigabe des Ballenstapels kann die Greifeinrichtung wieder in die Ausgangsstellung zurückgeführt werden, wobei mittels Stoßdämpfer verhindert wird, daß dies zu plötzlich und mit zu großer Wucht erfolgt.

Die Haltemittel sind wichtig für den Schiebevorgang, da der erste Ballen, wenn er die Höhe erreicht hat, nicht kippen oder aufgrund seines Gewichtes langsam wieder absinken sollte, da dies die Reibung zwischen den beiden Ballen unnötig erhöhen würde.

Eine Steuereinrichtung, die den Greif- und Freigabevorgang steuert, umfaßt einen ersten Endschalter für das Greifen des ersten Ballens und einer zweiten Endschalter für das Loslassen des ersten Ballens, wenn der zweite Ballen im wesentlichen unter dem ersten Ballen ist. Wenn der erste Endschalter von dem ersten Ballen betätigt wird, löst die Steuereinrichtung den Greifvorgang aus, so daß der erste Ballen von der Greifeinrichtung gefaßt wird. Wenn der zweite Ballen sich dann an der richtigen Stelle unter dem ersten Ballen befindet, erfolgt bei der Betätigung des zweiten Endschalters eine Freigabe des ersten, oberen Ballens, und damit eine Freigabe des Stapels.

Die Aufgabe wird außerdem durch erfindungsgemäße Verfahren mit den Merkmalen des Verfahrensanspruchs gelöst. Danach weist das Verfahren die folgenden Schritte auf:
· Greifen eines ersten, die Ballenpresse verlassenden Ballens mittels einer an einem Tragrahmen angebrachten Greifvorrichtung,
· Anheben des ersten Ballens durch Vorschub des nachfolgenden zweiten Ballens bis zu einer Höhe, die der Höhe des zweiten Ballens entspricht, wobei der erste Ballen von dem Punkt des Greifens bis zu dem Punkt, an dem das Anheben beendet ist, sich auf einer Kreisbahn bewegt, die durch die Befestigung der Greifeinrichtung an dem Tragrahmen bestimmt ist,
· Vorschieben des zweiten Ballens unter den ersten Ballen, und
· Loslassen des ersten Ballens, wenn der zweite Ballen sich im wesentlichen unter dem ersten Ballen befindet.

Durch den Vorschub des nachfolgenden zweiten Ballens bewegt sich der erste Ballen auf einer Kreisbahn, die den Ballen langsam mit der Vorwärtsbewegung nach oben anhebt. Dabei verschieben sich die einander zugewandten Stirnseiten der beiden Ballen relativ zueinander so lange, bis die untere Stirnkante des ersten Ballens an der oberen Stirnkante des zweiten Ballens angekommen ist und der untere Ballen sich dann unter den oberen, ersten Ballen schiebt. Das Loslassen des ersten Ballens erfolgt, wenn der zweite Ballen sich unter dem ersten Ballen befindet. Dann kann der Ballenstapel durch den nächsten nachfolgenden Ballen ausgeworfen werden.

Ein Greifen des ersten Ballens erfolgt, wenn dieser vollständig die Ballenpresse verlassen hat.

Die vorliegende Erfindung erlaubt somit das Stapeln von Ballen unterschiedlicher Höhe, Länge und Breite hin bis zu den sogenannten Großballen. Die besondere Ausgestaltung gestattet volle Funktionsfähigkeit auch bei schwierigem Gelände, wobei durch möglichst einfache Konstruktion mit geringer Bauhöhe mit wenig Steuerung, die keine zusätzlichen beispielsweise hydraulischen Vorrichtungen erfordern, eine kostengünstige Herstellung möglich ist.

Die Erfindung wird nachfolgend anhand eines Ausführungsbeispiels in Verbindung mit den begleitenden Zeichnungen näher erläutert. Es stellen dar:

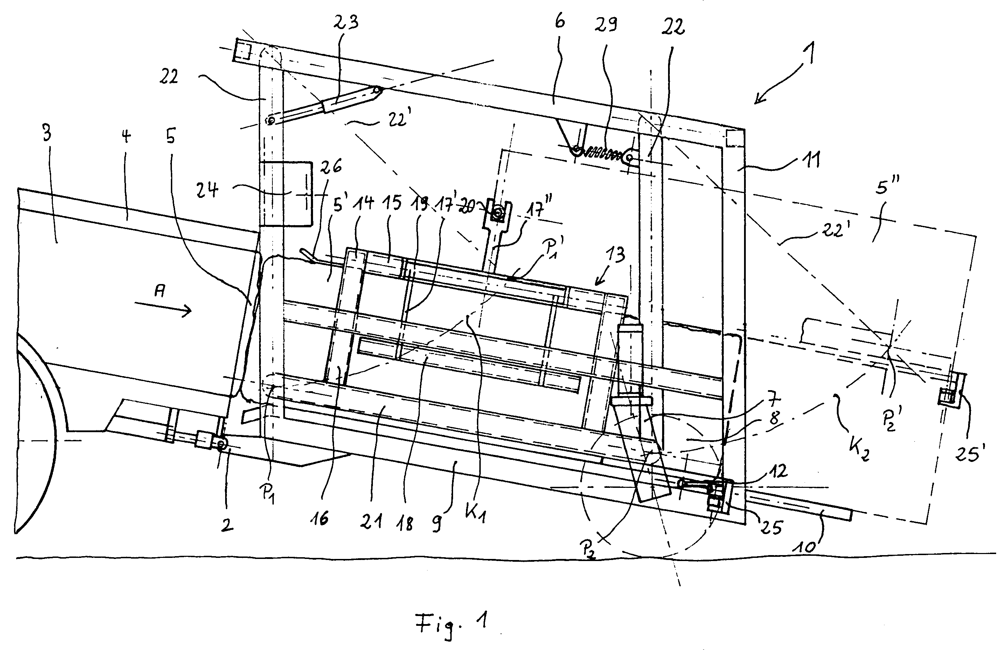

Figur 1 die schematische Darstellung der Vorrichtung von der Seite und
Figur 2 die schematische Darstellung der Vorrichtung von hinten.

Ein Ballenstapler 1 ist über eine Anhängeeinrichtung 2 an einer Ballenpresse 3 angehängt. Die Anhängung des Ballenstaplers 1 muß für den Fachmann in geläufiger Weise derart erfolgen, daß der Ballenstapler 1 unabhängig vom Gelände in einer Linie mit der Ballenpresse 3 läuft, damit ein Verkanten der aus dem Auswurfkanal 4 der Ballenpresse 3 austretenden Ballen 5 vermieden wird. Der Ballenstapler 1 weist einen Tragrahmen 6 auf, an dem auf beiden Seiten über eine Federeinrichtung 7 ein Rad 8 gelagert ist. Der Tragrahmen 6 ist nach hinten geneigt, so daß der Bodenträger 9 mit der Aufnahmefläche 10 zusammen mit der Fläche im Auswurfkanal 4 eine Ebene bildet.

Auf der Auflagefläche 10 befindet sich ein erster Ballen 5', der von dem sich noch in dem Auswurfkanal 4 befindenden nachfolgenden Ballen 5 in Richtung des Pfeils A bewegt wird. Im hinteren Bereich der Auflagefläche 10 befindet sich ein erster Endschalter 12, an den der Ballen 5' mit seiner vorderen Kante anstößt, wenn er sich vollständig auf der Aufnahmefläche 10 befindet.

Die Greifeinrichtung 13 weist einen Rahmenträger 14, bestehend aus einem parallel zu dem Ballen 5' verlaufenden Rahmengestell 15 und senkrecht dazu angeordnete Tragholme 16, auf. In den Längsholmen des Rahmengestells 15 befinden sich drehbar gelagerte Wellen 19, an denen untere Greifarme 17' an deren Ende Greifbacken 18 befestigt sind, und obere Greifarme 17'', an deren oberen Ende eine Betätigungseinrichtung 20 angreift. Das untere Ende der Tragholmen 16 ist auf jeder Seite des Ballens über einen weiteren Holmen 21 an jedem Ende an einem Schwenkarm 22 drehbar gelagert. Das andere Ende des Schwenkarms 22 ist an dem oberen Holmen des Tragrahmens 6 schwenkbar gelagert.

Schematisch dargestellte Haltemittel 23 (Stoßdämpfer) und Rückzugsfedern 29 dienen dazu, daß die Schwenkarme in ihrer angehobenen Position bleiben und nur kontrolliert in ihrer Ausgangsstelle zurückgehen können. Eine Steuereinrichtung 24, zu der auch ein zweiter Endschalter 25 gehört, steuert den Greif- und Loslaßvorgang der Greifeinrichtung 13.

Ein Führungsblech 26 an dem Rahmengestell 15 sorgt dafür, daß aus dem Auswurfkanal 4 in den Ballenstapler 1 eintretende Ballen 5 nicht gegen das Rahmengestell 15 stoßen und dadurch den Vorschub blockieren.

Mittels gestrichelter Linien ist die Bewegung des Ballens 5' aus der ursprünglichen Position auf der Aufnahmefläche 10 in seine angehobene Endposition 5'' dargestellt. Die Bewegung der Punkte P₁ und P₂ des Ballens 5' erfolgt entlang der gestrichelten kreisförmigen Linie K₁ und K₂ zu den Punkten P_{1'} und P_{2'}. Wenn der Ballen 5' seine Endposition 5'' erreicht hat, schiebt sich der nachfolgende Ballen unter den angehobenen Ballen 5''. Der Weg auf dem sich der Ballen nach oben bewegt, ergibt sich aus der Anlenkung der Schwenkarme 22, deren Endlage ebenfalls durch die gestrichelte Linie 22' dargestellt ist. Der fertige Stapel wird dann über das Ende der Aufnahmefläche 10 hinaus auf den Boden geschoben.

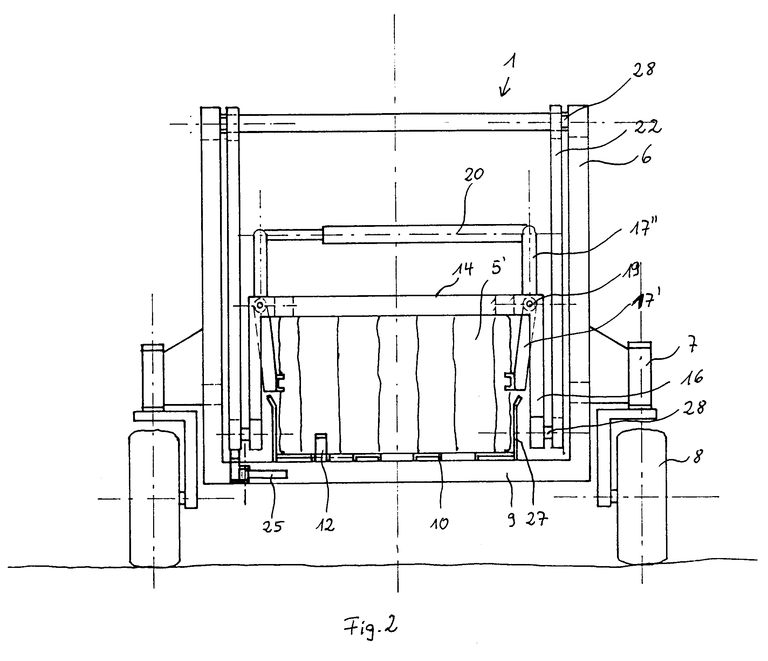

Figur 2 zeigt schematisch die Vorrichtung von hinten, so daß der U-förmige Aufbau des Tragrahmens 6 mit den am oberen Ende der Schenkel über Lagerwellen 28 drehbar gelagerten Schwenkarmen 22. Die Schwenkarme 22 wiederum tragen an ihrem unteren Ende ebenfalls über Lagerwellen 28 drehbar das untere Ende der Tragholmen 16 des Rahmenträgers 14 der Greifeinrichtung. Die Betätigungsvorrichtung 20 besteht aus einem hydraulisch betriebenen Zylinder, der von der Steuereinrichtung und Magnetventilen auseinanderfährt, um den Greifvorgang zu bewirken, bzw. sich zusammenzieht, wenn der Ballen 5' freigegeben werden soll. Aus Figur 2 ist ersichtlich, daß das obere Teil 17'' relativ zu dem unteren Teil 17' des Greifarms in Richtung des Ballens 5' hin abgewinkelt ist, um bei der Greifbewegung ein Kontakt mit dem Schwenkarm 22 zu vermeiden. Die drehbare Lagerung der miteinander verbundenen Greifarmteile 17' und 17'' erfolgt an den Eckpunkten des Rahmengestells mittels einer Welle 19.

Die Aufnahmefläche 10 bildet zusammen mit den Seitenwänden 27 eine Wanne zur guten Führung des Ballens. Die Aufnahmefläche selbst besteht aus einzelnen in Längsrichtung verlaufenden Blechen.

Die Steuerungseinrichtungen mit den einzelnen Zuleitungen sind nicht dargestellt und ergeben sich als solches für den Fachmann aus der in der Beschreibung angegebenen Funktionsweise.

## Patentansprüche

1. Fahrbare Vorrichtung zum Stapeln von quaderförmigen Ballen (5, 5', 5'') mit einer Anhängeeinrichtung (2) an eine Ballenpresse (3) und eine Aufnahmefläche für die, die Ballenpresse verlassenden Ballen (5, 5', 5'') von denen ein erster (5'') mit einer Greifeinrichtung (13) erfaßt wird, die sich sich an einer Hebeeinrichtung (22) befindet, mit welcher der erfaßte Ballen (5'') angehoben und auf einer zweiten (5') den ersten (5'') aus der Ballenpresse (3) folgenden Ballen abgelegt wird, **dadurch gekennzeichnet**, daß die Greifeinrichtungen (13) den ersten Ballen (5'') greift, so daß der Ballen (5'') die Greifeinrichtung (13) unverrückbar miteinander verbunden sind, und die Hebeeinrichtung (22) derart angelegt ist, daß der erste Ballen (5'') durch den ersten Ballen (5'') schiebenden zweiten Ballen (5') angehoben wird.

2. Vorrichtung nach Anspruch 1, **dadurch gekennzeichnet**, daß die Hebeeinrichtung (22) oberhalb der beiden aufeinanderliegenden Ballen (5'', 5') angelenkt ist und der erste Ballen (5'') durch die Greifeinrichtung (13) seitlich erfaßt wird.

3. Vorrichtung nach Anspruch 1 oder 2, **dadurch** **gekennzeichnet**, daß die Greifeinrichtung über Schwenkarme (22) an einem Tragrahmen angelenkt ist, an denen am unteren Ende die Greifeinrichtung (13) um eine horizontale Achse schwenkbar gelagert ist.

4. Vorrichtung nach einem der vorangegangenen Ansprüche, **dadurch gekennzeichnet**, daß die Greifeinrichtung zwei sich gegenüberliegend angeordnete Greifbacken (18) aufweist.

5. Vorrichtung nach einem der vorangegangenen Ansprüche, **dadurch gekennzeichnet**, daß die Greifeinrichtung einen Rahmenträger (14) umfaßt, an dessen in Längsrichtung verlaufenden Holmen jeweils mindestens ein um eine parallel zum Längsholmen verlaufende Drehachse drehbar gelagerter Greifarm (17', 17'') angeordnet ist, an dessen oberen Ende eine Betätigungseinrichtung (20) angreift und an dessen unteren Ende eine Greifbacke (18) befestigt ist.

6. Vorrichtung nach Anspruch 4 oder 5, **dadurch gekennzeichnet**, daß der Greifarm (17', 17'') nach innen in Richtung Ballen abgewinkelt ist.

7. Vorrichtung nach Anspruch 4 oder 5,
**dadurch gekennzeichnet**, daß die Betätigungseinrichtung (20) einen hydraulisch beaufschlagten Zylinder (20) umfaßt, der mit den jweiligen oberen Enden der beiden Greifarme (17', 17'') gekuppelt ist.

8. Vorrichtung nach einem der vorangegangenen Ansprüche 3 bis 7, **dadurch gekennzeichnet**, daß der Tragrahmen (6) zusammen mit einem Bodenträger (9) ein U-förmiges Querschnittsprofil aufweist, an dessen oberen Schenkelenden die Schwenkarme (22) um eine horizontale Achse drehbar angelenkt sind, an deren unteren Enden um eine horizontale Achse schwenkbar gelagert die Enden eines nach unten offenen im Querschnitt U-förmiges Profil aufweisenden Rahmenträgers (14) der Greifeinrichtung (13) gelagert ist, wobei die Greifarme (17', 17'') an in den Ecken des Rahmenträgers (14) angeordneten, um horizontal in Längsrichtung verlaufende Achsen schwenkbar sind.

9. Vorrichtung nach einem der vorangegangenen Ansprüche, **dadurch gekennzeichnet**, daß ein erster Endschalter (12) für das Greifen des ersten Ballens (S'') und ein zweiter Endschalter (25) für das Loslassen des ersten Ballens (S''), vorgesehen ist.

10. Verfahren zum Stapeln von zwei quaderförmigen Ballen und der Verwendung einer kontinuierlich arbeitenden Ballenpresse bei der die Ballen durch den nachfolgenden Ballen aus der Ballenprese bewegt werden und einer, der Ballenpresse nachlaufenden Stapelvorrichtung, die die fertigen, die Ballenpresse verlassenden Ballen stapelt, gekennzeichnet durch die folgenden Schritte:
· Greifen eines ersten die Ballenpresse verlassenden Ballen mittels einer an einem Tragrahmen angebrachten Greifeinrichtung,
· Anheben des ersten Ballens durch Vorschub des nachfolgenden zweiten Ballens bis zu einer Höhe, die der Höhe des zweiten Ballens entspricht, wobei der erste Ballen von dem Punkt des Greifens bis zu dem Punkt, an dem das Anheben beendet ist, sich auf einer Kreisbahn bewegt, die durch die Befestigung der Greifeinrichtung an dem Tragrahmen bestimmt ist,
· Verschieben des zweiten Ballens unter den ersten Ballen, und
· Loslassen des ersten Ballens, wenn der zweite Ballen sich im wesentlichen unter dem ersten Ballen befindet.
